# EUROPEAN PATENT APPLICATION

(11) **EP 3 453 646 A1**
(43) Date of publication of application: **13.03.2019**
(21) Application number: 17190351.1
(22) Date of filing: 11.09.2017
(51) Int. Cl.: B65G 1/04, B65G 1/137, G06Q 10/08

(54) **SYSTEM FOR STORING STORAGE UNITS**

(71) Applicant: Nekos Oy, 33800 Tampere (FI)
(72) Inventor: Niemi, Jouni, 33800 Tampere (FI); Vänskä, Veli-Pekka, 33800 Tampere (FI)
(74) Representative: Kolster Oy Ab

(57) **Abstract**

A system for storing storage units or the like in the form of successive rows (3) positioned on a base (1), comprising at least one crosswise conveyor (2, 8) for carrying storage units, said crosswise conveyor (2, 8) being arranged parallel to said rows (3) in the horizontal direction and directly above said base (1), the crosswise conveyor (2, 8) being movable in a direction (4) substantially parallel with the plane of the base (1) and perpendicular to its longitudinal direction, a handling mechanism (5) with which said crosswise conveyor (2, 8) is provided. The handling mechanism (5) is movable in the longitudinal direction of the crosswise conveyor (2, 8) and has means for grasping the storage unit for moving the storage unit. The control unit further comprises a storage unit information unit provided with a storage unit information means for coupling said storage unit with a storage unit information specific to said storage unit, and a database for storing said storage unit information for further use.

## Description

### Background

The invention relates to a system for storing storage units or the like in the form of successive rows positioned on a base, comprising at least one crosswise conveyor for carrying storage units, said crosswise conveyor being arranged parallel to said rows in the horizontal direction and directly above said base, the crosswise conveyor being movable in a direction substantially parallel with the plane of the base and perpendicular to its longitudinal direction, a handling mechanism with which said crosswise conveyor is provided, which handling mechanism is movable in the longitudinal direction of the crosswise conveyor and has means for grasping the storage unit for moving the storage unit, and for carrying the storage unit into a row from the conveyor or vice versa, to unload them from a row, and at least one lengthwise conveyor which is provided on one end and at the same level of the crosswise conveyor and which is connected to said end of the crosswise conveyor for moving storage units between the crosswise conveyor and the lengthwise conveyor, and a control unit for controlling the crosswise conveyor, said at least one lengthwise conveyor, and the handling mechanism.

FI 96107B discloses a solution of a single level storage that has been proved to be practical and useful for varying needs of storages.

However, there is still an ongoing need for more adaptable and versatile systems for storing storage units.

### Brief description

Viewed from a first aspect, there can be provided a system for storing storage units or the like in the form of successive rows positioned on a base, comprising at least one crosswise conveyor for carrying storage units, said crosswise conveyor being arranged parallel to said rows in the horizontal direction and directly above said base, the crosswise conveyor being movable in a direction substantially parallel with the plane of the base and perpendicular to its longitudinal direction, a handling mechanism with which said crosswise conveyor is provided, which handling mechanism is movable in the longitudinal direction of the crosswise conveyor and has means for grasping the storage unit for moving the storage unit, and for carrying the storage unit into a row from the conveyor or vice versa, to unload them from a row, and at least one lengthwise conveyor which is provided on one end and at the same level of the crosswise conveyor and which is connected to said end of the crosswise conveyor for moving storage units between the crosswise conveyor and the lengthwise conveyor, and a control unit for controlling the crosswise conveyor, said at least one lengthwise conveyor, and the handling mechanism. wherein the control unit further comprises a storage unit information unit provided with a storage unit information means for coupling said storage unit with a storage unit information specific to said storage unit, and a database for storing said storage unit information for further use.

Thereby a adaptable and versatile system may be achieved.

The system is characterised by what is stated in the characterising part of the independent claim. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

### Brief description of figures

Some embodiments illustrating the present disclosure are described in more detail in the attached drawings, in which
Figure 1 is a schematic top view of a storage system,
Figure 2 is a schematic perspective view of the storage system shown in Figure 1, and
Figure 3 is a schematic top view of another storage system.

In the figures, some embodiments are shown simplified for the sake of clarity. Similar parts are marked with the same reference numbers in the figures.

### Detailed description

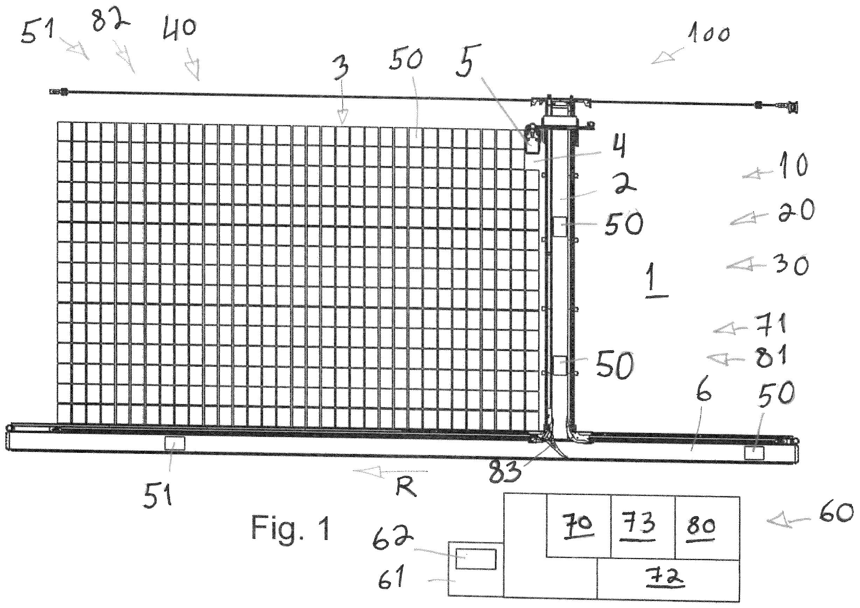

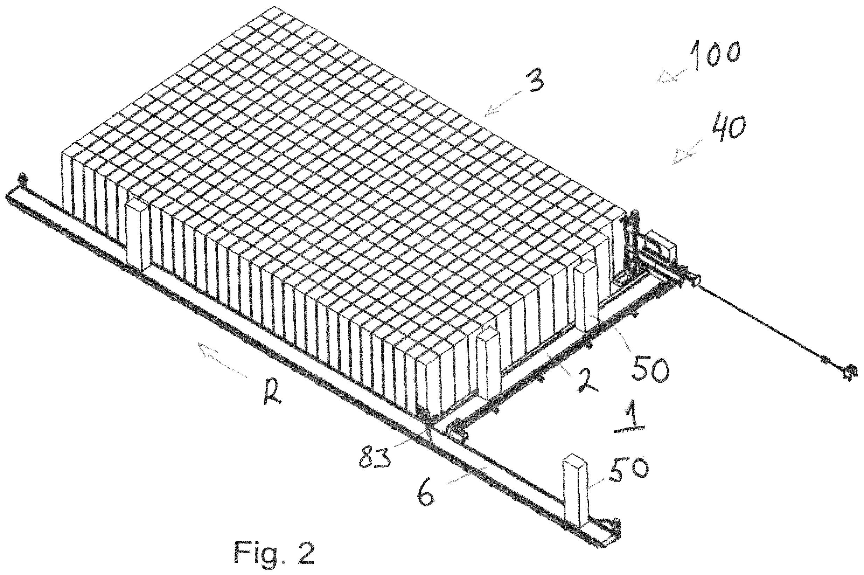

Figure 1 is a schematic top view of a storage system and Figure 2 is a schematic perspective view of the storage system shown in Figure 1.

The storage system 100 comprises a so-called single level storage that comprises a solid horizontal base or support 1, such as the floor of a storage space. The term "horizontal" means here not only a absolutely horizontal plane but also planes that are somewhat slanted e.g. for leading water in predetermined direction. The structure of the base may be solid, railed, grating, lattice etc.

The storage is used for storing storage units 50 or the like in the form of successive rows 3 positioned on the base 1.

The storage unit 50 may be a case, a container, a crate, a box, a barrel etc.

According to an aspect, the storage unit 50 is a pile of two or more sub storage units, wherein the sub storage unit may be a case, a container, a crate, a box, a barrel, etc.

The storage system 100 comprises at least one crosswise conveyor. The embodiment shown in Figure 1 comprises one crosswise conveyor 2 for carrying the storage units 50 into the row 3 or unloaded from the rows 3. The crosswise conveyor is arranged parallel to the rows 3 in the horizontal direction and directly above the base 1. The crosswise conveyor 2 is movable in a direction 4 substantially parallel with the plane of the base 1 and perpendicular to the longitudinal direction of the crosswise conveyor. Thus the crosswise conveyor 2 may always assume a defined position with respect to the space of the rows 3 of storage units 50 to be handled in the next stage.

In an embodiment, the lengthwise conveyor 6 is a conveyor having a fixed length, such as a roller conveyor or a belt conveyor. In another embodiment, the lengthwise conveyor 6 is a conveyor the length of which is variable, such as a telescopic conveyor. In still another embodiment, the lengthwise conveyor 6 is a transfer car or automatic guided vehicle.

The crosswise conveyor 2 is provided with a handling mechanism 5 that can be moved in the longitudinal direction of the crosswise conveyor.

The handling mechanism 5 is provided with means for grasping the storage unit 50 and carrying it from the crosswise conveyor 2 into one of the rows 3, or vice versa, the storage unit 50 onto the crosswise conveyor 2.

In case the storage unit 50 comprises a pile of sub storage units, the handling mechanism 5 is arranged to carry the whole pile into one of the rows 3, or the whole pile onto the crosswise conveyor 2.

In an embodiment, the storage system 100 comprises at least one lengthwise conveyor 6 that is provided on one end and at the same level with the crosswise conveyor 2.

The lengthwise conveyor 6 is connected to said end of the crosswise conveyor 2 for moving storage units 50 between the crosswise conveyor 2 and the lengthwise conveyor 6.

The operations of the system 100 are controlled by a control unit 60, which controls e.g. the crosswise conveyor 2, the lengthwise conveyor 6, 7, and the handling mechanism 5.

The control unit 60 may be realized by e.g. a programmable logic controller (PLC), a personal computer (PC), an artificial intelligence, a microcontroller, a relay arrangement, a numerical control (NC), a mobile device, etc. or as a combination of one or more of these.

The control unit 60 comprises a storage unit information unit 70 that is provided with a storage unit information means 71 that is arranged to couple the storage unit 50 with a storage unit information 51 specific to the storage unit 50.

The storage unit information unit 70 may comprise a computer program product loadable to a memory of the control unit 60. The computer program product comprises a program code which, when executed by the processor of control unit 60, realizes said coupling of the storage unit information 51 to the storage unit 50.

Furthermore, the control unit 60 comprises a database 72 for storing said storage unit information 51 for further use. In an embodiment, the database 72 is arranged in physical entity of the control unit 60.

In another embodiment, the database 72 is arranged in a network server that is connected to the control unit 60 by wire or wirelessly, e.g. over Internet or Intranet connection.

In still another embodiment, the database 72 is arranged in a separate external memory means, such as an USB stick, a SD card or a CD-ROM connectable to the control unit 60.

The control unit 60 also comprises a user interface 61, via which the operator using the system 100 can control the functions thereof. In an embodiment, the user interface 61 comprises a display 62 through which the storage unit information 51 can be visually seen. In an embodiment, the storage unit information 51 is shown by colour codes. However, the storage unit information 51 may also be shown by graphical codes or symbols, graphs, numerical values, or any visually shown symbols or combinations thereof.

Also some further information may be shown, and optionally stored in the database 72, in addition to the storage unit information 51. This information may comprise e.g. a storage location information that is discussed more detailed later in this description.

In an embodiment, the storage unit information 51 comprises an information about location the storage unit 50 in the system 100.

An advantage is that the situation of the system 100 may be well-controlled, and the events of the storage may be foreseen.

The location may be detected in at least one of the conveyors 2, 6, or at least in some predetermined portion thereof, in the handling mechanism 5, and/or on the base 1. In an embodiment, the location is detected in a certain spots or locations of the system 100, such as at the forward end of a conveyor. In another embodiment, the location is detected in a continuous way all the path the storage unit 50 is transported through the system 100.

The location of the storage unit 50 may be detected by e.g. computer vision equipment, photo cell(s), ultrasonic sensor(s), limit switch(s), laser(s), capasitive or inductive sensor(s), radar(s), etc. or combination thereof. The location may be detected directly from the storage unit 50. In an embodiment the location is detected indirectly, e.g. based on the position measurement system of the conveyor 2, 6 carrying the storage unit 50. Position measurement system of the conveyor may comprise pulse encoder(s), absolute encoder(s), laser encoder(s), position information calculated from the speed of the conveyor, or a combination of one or more of these.

In an embodiment, the storage unit information 51 comprises an information about the location of the storage unit 50 carried in the row 3. In other words, the placement of the storage unit 50 positioned on the base 1.

An advantage is that the information makes it possible to an even better control over the storage and additional functions and activities to be carried out by the system 100. Another advantage is that it is possible to store the storage units 50 leaving some distance therebetween. This is especially advantageous when storing products that need air circulation in their surroundings. Also it is possible to leave quite broad unloaded strips of the base 1 between storage units 50, and thus create breaks that may inhibit spreading of fire (if taking place) in the storage.

The control unit 60 may also comprise an anti-collision system 30 that is arranged to compare the location of the handling mechanism 5 and the location of storage units 50, and to limit the movement of the handling mechanism 5 in case of risk of a collision.

An advantage is that interruptions of the storage functions and need for cleaning work caused by collisions may be avoided, or at least minimized.

Another advantage is that the speed of the handling mechanism 5 may be rised when there is no risk for collision.

In an embodiment, the storage unit information 51 comprises an information about time of loading in the crosswise conveyor 2, and/or the lengthwise conveyor 6, of a storage unit 50 arriving in the system 100.

An advantage is that a time-span that the storage unit 50 has been in the storage may be known, allowing e.g. use of the storage that is close to a first-in-first-out (FIFO) principle to be realized in the system 100. Thus the last-in-first-out (LIFO) principle being the practice in the known single level storages may be avoided. In practice this may mean that the handling mechanism 5 is guided to unload the end of the storage, or the sub-storage, comprising the storage units 50 having the longest time span. By contrast, the storage units 50 arriving in the storage 40 are loaded to storage locations 4 of another end of the storage, or another the sub-storage. In an embodiment, the control unit 60 is arranged to watch the relation of coming storage units 50 to storage units 50 to be unloaded. If the relation changed more than a prefixed limit value, the position of the crosswise conveyor 2 is changed to another end of the storage or to another sub-storage.

The unloading of the oldest storage units 50 may also give an advantage that all areas of the base 1 will be emptied from the storage units 50 every now and then. Thus, all areas of the base 1 may be overhauled, e.g. washed out, accordingly. This is an important advantage when e.g. foodstuffs are to be stored.

In an embodiment, the control unit 60 comprises a history data unit 73. Said history data unit 73 comprises history data about storage unit information that extends to a period of time that is older or longer than the storage unit information regarding the storage units 50 being present in the storage. In an embodiment, the history data comprises information about activity of the system 100 on hourly basis. In another embodiment, the history data comprises information about activity of the system 100 on daily basis. In still another embodiment, the history data comprises information about activity of the system 100 on basis of season and off-season of the stored items.

In an embodiment, the control unit 60 utilizes the history data when controlling the system 100. For instance, if the history data is showing a high activity in a certain part of the storage in every Thursday morning, the control unit may move the crosswise conveyor 2 in said part of storage already on Wednesday evening. Also, the history data may highlight periods of time when there will be much more storage units coming in the storage as unloaded from the storage. Then the control unit 60 may move the crosswise conveyor 2 in advance to that end of the storage containing the oldest storage units 50.

Thus, the system 100 is able to foresee the need of activities, and speed up the operations taking place in the storage.

In an embodiment, the content of a storage unit 50 or the product(s) included in the storage unit 50 is included in the storage unit information 51. This may consist of, or comprise, information of an individual storage unit being arranged in a pile making the storage unit 50. For instance, the system 100 may comprise a reader for an RFID tag, a bar code, a QR code, etc. arranged to read corresponding tags in the storage units 50. The information of an individual storage unit may comprise e.g. the type of the storage unit, and/or information about product(s) arranged in the storage unit.

In an embodiment, the storage unit information 51 comprises information about the deliver or supplier of the storage unit 50. An advantage is that the number of the storage units supplied from a certain supplier is known.

In an embodiment, the storage unit information 51 comprises an orientation information of the storage unit 50. In some systems 100 the orientation of the storage unit 50 may be changed. The orientation is especially advantageous information if the shape or structure of the storage unit in its first end differs from the second end thereof. The orientation information can be used in controlling the movements of the handling mechanism 5 during grasping to the storage unit 50.

According to an aspect, the control unit 60 further comprises a storage location information unit 80 provided with a storage location information means 81. The area of the base 1, or some parts of it, is divided in plurality of storage locations 4 arranged in the rows 3.

The storage location information unit 80 is arranged to couple the storage locations 4 with a storage location information 82 specific to said storage location. The storage location information 82 may be stored in the database 72 for further use, and shown through the user interface 61.

An advantage of the storage location information unit 80 is that the storage location may be individualized by the information.

In an embodiment, the storage location information 82 comprises an information about allowability of use of the storage location 4. An advantage is that a storage location 4 being, for some reason, not available or accessible can be recognized. Thus, the handling mechanism 5 may be guided to past said storage location 4 and to carry the storage unit into a next allowable storage location 4.

In an embodiment, the system 100 further comprises a surface measuring equipment 10 for measuring the relief of the storage location 4. The relief information may be a part of the storage location information 82. In an embodiment, the relief information is used for establishing a height adjustment factor for the storage location 4. The height adjustment factor may then to be stored in the database 72. The controlling unit takes into account the height adjustment factor when the correct height position of the handling mechanism 5 in the storage location is determined. Thus the handling mechanism is able to grasp to the storage unit 50 correctly.

In an embodiment, there are at least two height adjustment factors for the storage location 4. The reason for this is that the handling mechanism may load or unload the storage location from at least two sides thereof, and the height position may change accordingly. An advantage is that the height position factor is more accurate and the storage location may be loaded or unloaded safely irrespective of the side of the loading or unloading.

The surface measuring equipment 10 may be arranged in the handling mechanism 5, for instance. The equipment 10 may comprise e.g. laser measuring means, measuring probe limit switch(es), ultrasonic means, etc.

In an embodiment, the system 100 further comprises a base measurement equipment 20 for measuring the profile of the base 1. In some cases, the storage has to be raised on a base that is not a perfectly horizontal plane. The base measurement equipment 20 is able to automatically measure the vertical position of certain points of the base 1, and store the profile information in the database 72. The controlling unit may take into account the profile of the bas when the correct height position of the handling mechanism 5 in the storage location is determined. Thus, the handling mechanism is able to grasp to the storage unit 50 correctly.

It is to be noted, that the automatic functions mentioned in this description may be passed by inputs of the operator of the system 100, of the transport company taking care of the transportation of the storage units in and out of the storage, and/or system input signals from an external system, such as a control system having a higher priority than the control unit 60.

The storage units 50 may be moved in the system 100 shown in Figure 1 as follows.

A lengthwise conveyor 6 is adapted to supply storage units 50 coming from right side of Figure 1 onto storage conveyor 2 associated with a storage 40 for arranging storage units 50 in the storage 40. A running direction of the lengthwise conveyor 6 is shown by arrow R. However, it is to be noted that the running direction may be opposite to that shown by the arrow R. The running direction R may also be changed at need.

Thus, in an embodiment, storage units coming in the storage may enter the system 100 from the opposite end of the lengthwise conveyor 6 as the storage units leaving the system. In this embodiment, the position of a guiding element 83 being arranged to guide the movement of the storage units is changed to guide incoming storage units on the crosswise conveyor 2, and leaving storage units on the lengthwise conveyor 6 in direction R.

In another embodiment, storage units coming in the storage may enter the system 100 from the same end of the lengthwise conveyor 6 as the storage units leaving the system.

In still another embodiment, storage units coming in the storage may enter the system 100 either from the same end or opposite end of the lengthwise conveyor 6 as the storage units leaving the system.

The lengthwise conveyor 6 is also arranged to receive storage units 50 unloaded from the storage 40 and to supply them to left side of Figure 1.

A handling mechanism 5 takes care of loading the storage units 50 on the base 1, in storage locations 4 thereon, or unload them from the base 1 on the storage conveyor 2.

The operations and functions of the system 100 are controlled by a control unit 60.

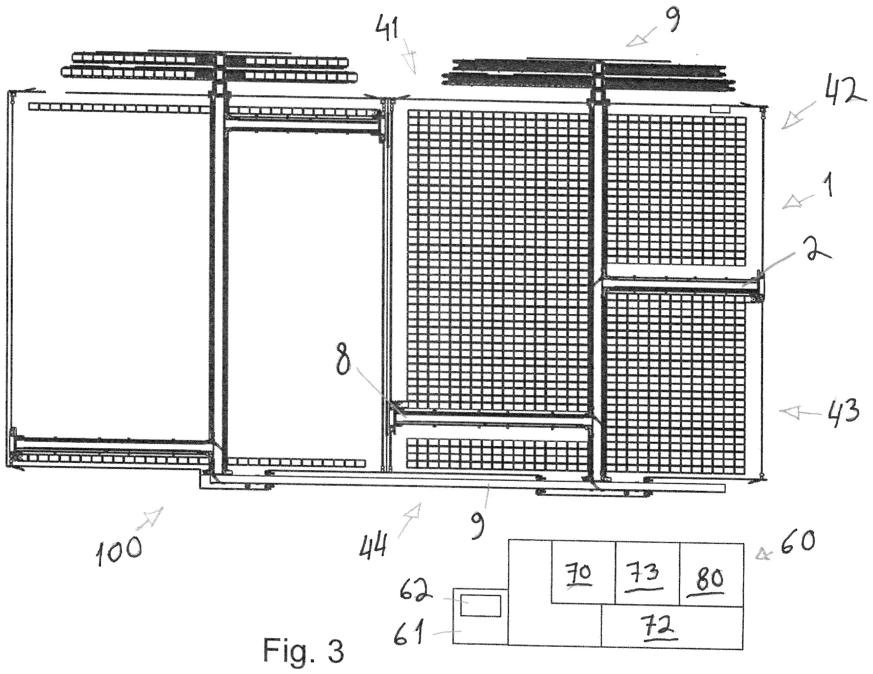

Figure 3 is a schematic top view of another storage system. According to an aspect, the system 100 is arranged to carry the storage units 50 in (at least) two sub-storages. In the embodiment shown in Figure 3, there are four sub-storages 41, 42, 43 and 44 in the right side of the of Figure 3. The left side of Figure 3 may comprise an identical storage 100 as the right side

In an embodiment, all the sub-storages 41 - 44 are used for storing similar storage units 50. In another embodiment, each of the sub-storages 41 - 44 are used for storing storage units 50 that are different from storage units 50 in another sub-storages 41 - 44. In still another embodiment, a first pair of sub-storages 41 and 42 are used for storing first storage units 50, whereas a second pair of storages 43 and 44 are used for storing second storage units 50 that are different from the first storage units 50.

The system 100 may comprise one or more crosswise conveyors,as well as one or more lengthwise conveyors.

In the embodiment shown in Figure 2 there are two 2, 8 crosswise conveyors and one lengthwise conveyor 6. Furthermore, the lengthwise conveyor is conneted to two additional conveyors 9, first of which being adapted to feed the lengthwise conveyor 6 with storage units 50 and second of which being adapted to receive storage units 50 from the lengthwise conveyor 6.

The storage unit information 51 stored in and used by the control unit 60 may be utilized in complicated storage layouts, one of which being shown in Figure 2. For instance, the already mentioned feature where the information about time of loading in the crosswise conveyor and/or the lengthwise conveyor is detected and stored for allowing operations close to a (FIFO) principle may be very useful in complicated storage layouts.

In an embodiment, the control unit 60 is provided with a time limit for a maximum storage period for the storage units 50. If happens that said time limit is exceeded in one of the sub-storages 41 - 44, the control unit will to guide the crosswise conveyor 2, 8 and the handling mechanism 5 thereon for unloading said one of the sub-storages 41 - 44. An advantage is that the wastage of the stored items may be decreased.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### Reference symbols

- 1: base
- 2, 8: crosswise conveyor
- 3: row
- 4: storage location
- 5: handling mechanism
- 6, 7: lengthwise conveyor
- 8, 9: additional conveyor
- 10: surface measuring equipment
- 20: base measurement equipment
- 30: anti-collision system
- 40: storage
- 41 - 44: sub-storage
- 50: storage unit
- 51: storage unit information
- 60: control unit
- 61: user interface
- 62: display
- 70: storage unit information unit
- 71: storage unit information means
- 72: database
- 73: history data unit
- 80: storage location information unit
- 81: storage location information means
- 82: storage location information
- 83: guiding element

- 100: system

- R: running direction

## Claims

1. A system for storing storage units or the like in the form of successive rows (3) positioned on a base (1), comprising
at least one crosswise conveyor (2, 8) for carrying storage units, said crosswise conveyor (2, 8) being arranged parallel to said rows (3) in the horizontal direction and directly above said base (1),
the crosswise conveyor (2, 8) being movable in a direction (4) substantially parallel with the plane of the base (1) and perpendicular to its longitudinal direction,
a handling mechanism (5) with which said crosswise conveyor (2, 8) is provided,
which handling mechanism (5) is movable in the longitudinal direction of the crosswise conveyor (2, 8) and has means for grasping the storage unit for moving the storage unit, and
for carrying the storage unit into a row (3) from the conveyor (2, 8) or vice versa, to unload them from a row (3), and
at least one lengthwise conveyor (6, 7) which is provided on one end and at the same level of the crosswise conveyor (2, 8) and which is connected to said end of the crosswise conveyor (2, 8) for moving storage units (50) between the crosswise conveyor (2, 8) and the lengthwise conveyor (2, 8), and
a control unit () for controlling the crosswise conveyor (2, 8), said at least one lengthwise conveyor (6, 7), and the handling mechanism (5),
**characterized in that** the control unit further comprises a storage unit information unit provided with
- a storage unit information means for coupling said storage unit with a storage unit information specific to said storage unit, and
- a database for storing said storage unit information for further use.

2. The system as claimed in claim 1, **characterised in that** the storage unit information comprises an information about location the storage unit in the system.

3. The system as claimed in claim 1 or 2, **characterised in that** the storage unit information comprises an information about a storage location of the storage unit storage unit carried in the row (3).

4. The system as claimed in claim 3, **characterised in that** the storage unit information comprises an information about time of loading of the storage unit in the crosswise conveyor (2, 8) and/or the lengthwise conveyor (6, 7).

5. The system as claimed in any of the preceding claims, **characterised in that** the control unit comprises history data unit, the history data unit comprising data about storage unit information extending to period of time that is older than the storage unit information regarding the storage units being present in the storage.

6. The system as claimed in any of the preceding claims, **characterised in that**
the system is arranged to carry the storage units in (at least) two sub-storages (41-44), and that
the storage unit information comprises an information about time of loading of the storage unit in one of the sub-storages (41-44),
the control unit (60) being provided with a time limit for a maximum storage period for the storage units (50), and, in case said time limit being exceeded in one of the sub-storages (41-44),
the control unit (60) being arranged to guide the crosswise conveyor (2, 8) and the handling mechanism (5) thereon for unloading said one of the sub-storages (41-44).

7. The system as claimed in any of the preceding claims, **char-acterised** in that the control unit (60) further comprises a storage location information unit (80) provided with
- a storage location information means (81) for coupling storage units (50) with a storage location information (82) specific to said storage location (4), and
- a database (72) for storing said storage location information (82) for further use.

8. The system as claimed in claim 7, **characterised in that** the storage location information (82) comprises an information about allowability of use of the storage location.

9. The system as claimed in any of the preceding claims, **characterised in that** the system (100) further comprises surface measuring equipment (10) for measuring the relief of the storage location (4), and
the storage unit information (82) comprises an information about the relief of the storage location.

10. The system as claimed in any of the preceding claims, **characterised in that** the control unit (60) further comprises a base measurement equipment (20) for measuring the profile of the base, and
the storage unit information (82) comprises an information about the profile of the base.

11. The system as claimed in any of the preceding claims, **characterised in that** the control unit (60) further comprises an anti-collision system (30), said system arranged to compare the location of the handling mechanism (5) and the location of storage units, and to limit the movement of the handling mechanism (5) in case of risk of a collision.

12. The system as claimed in any of the preceding claims, **characterised in that** the control unit (60) further comprises a display (62) for showing visually the storage unit information.

13. The system as claimed in claim 12, **characterised in that** the storage unit information is arranged to be shown by colour codes.

14. The system as claimed in any of the preceding claims, **char-acterised** in that the storage unit information (51) comprises an information about the location of the storage unit on the crosswise conveyor (2, 8) and/or the lengthwise conveyor (6, 7).

15. The system as claimed in any of the preceding claims, **characterised in that** the storage unit (50) is a pile of two or more sub storage units.
